Europäisches Patentamt

European Patent Office

Office européen des brevets

(19)

(11) **EP 1 426 426 A1**

(12) **EUROPEAN PATENT APPLICATION**

(43) Date of publication:
**09.06.2004 Bulletin 2004/24**

(51) Int Cl.⁷: **C09J 5/00**

(21) Application number: **03257255.4**

(22) Date of filing: **18.11.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **02.12.2002 US 430222 P**

(71) Applicant: **ROHM AND HAAS COMPANY**
**Philadelphia, Pennsylvania 19106-2399 (US)**

(72) Inventors:
• **Kauffman, Thomas Frederick**
**Harleysville, Pennsylvania 19438 (US)**

• **Whitman, David William**
**Harleysville, Pennsylavnia 19438 (US)**

(74) Representative: **Kent, Venetia Katherine et al**
**Rohm and Haas (UK) Ltd.,**
**European Patent Department,**
**28th Floor,**
**City Point,**
**One Ropemaker Street**
**London EC2Y 9HS (GB)**

(54) **Curable composition and method for the preparation of a cold seal adhesive**

(57)    A curable composition containing at least one ethylenically unsaturated compound and at least one liquid elastomer is provided. The curable composition is useful for preparing a cold seal adhesive. A method is provided for preparing the cold seal adhesive, which includes the use of electron beam radiation to initiate polymerization of the curable composition.

EP 1 426 426 A1

**Description**

The present invention relates generally to a curable composition suitable for preparing a cold seal adhesive. In particular, the present invention relates to a curable composition containing ethylenically unsaturated compound, liquid elastomer, and optionally, tackifier. A process is provided for polymerizing the curable composition using electron beam irradiation to prepare a cold seal adhesive. The cold seal adhesive is useful in food packaging applications.

A cold seal adhesive is a material that has good adhesion to itself at ambient temperatures, a property that is often referred to as "self-adhesion", "auto adhesion", or "autohesion". Further characteristics of a cold seal adhesive are good primary adhesion to substrates but good non-blocking character. A wide variety of articles are manufactured using cold seal adhesives, including packaging for food and medical items, and self-sealing items such as packaging, diapers, and garments.

Cold seal adhesives are typically formulated prior to application onto a substrate. Manufacturing processes employing cold seal adhesives often apply the cold seal adhesive as an aqueous based or a solvent based formulation to ensure the controlled application of the cold seal adhesive onto a substrate, especially in continuous production processes. After application, these formulations require a drying step to remove the water or solvent from the applied cold seal adhesive formulation, which imposes addition constraints on the manufacturing process, such as heating or solvent collection. Alternatively, the cold seal adhesive is applied by heating the cold seal adhesive in order to obtain suitable flow properties for application. For example, U.S. Patent No. 6,221,448 B1 discloses a cold seal composition containing at least one homogeneous ethylene/α-olefin interpolymer. The disclosed methods for applying this cold seal composition include casting from solution or applying as a molten material using a hot melt coating process.

Methods of preparing articles having cold seal adhesives are desired that do not require heating of the cold seal adhesive prior to application or casting the cold seal adhesive from an aqueous or a solvent based formulation. Further, it is also desired that the cold seal adhesives used in such methods are suitable for preparing food packaging.

It has now been found that such improvements are obtained by methods including the preparation of cold seal adhesives by the electron beam induced polymerization of a curable composition.

According to the first aspect of the present invention, a method for preparing a cold seal adhesive is provided including the steps of: providing a curable composition containing from 30 to 90 weight % of at least one ethylenically unsaturated compound selected from ethylenically unsaturated monomers and ethylenically unsaturated oligomers, from 10 to 50 weight % of at least one liquid elastomer, and from 0 to 60 weight % of at least one tackifier, wherein all weight % are based on total weight of the curable composition; and subjecting the curable composition to electron beam radiation to provide the cold seal adhesive.

A second aspect of the present invention relates to a cold seal adhesive prepared by the polymerization of a curable composition containing from 30 to 90 weight % of at least one ethylenically unsaturated compound selected from ethylenically unsaturated monomers and ethylenically unsaturated oligomers; from 10 to 50 weight % of at least one liquid elastomer selected from polyisoprenes, polybutadienes, and polyurethanes; and from 0 to 60 weight % of at least one tackifier; wherein all weight % are based on total weight of the curable composition; and wherein the curable composition is substantially free of photoinitiator.

A third aspect of the present invention provides a curable composition containing from 30 to 90 weight % of at least one ethylenically unsaturated compound selected from ethylenically unsaturated monomers and ethylenically unsaturated oligomers; from 10 to 50 weight % of at least one liquid elastomer selected from polyisoprenes, polybutadienes, and polyurethanes; and from 0 to 60 weight % of at least one tackifier; wherein all weight % are based on total weight of the curable composition; and wherein the curable composition is substantially free of photoinitiator.

"Glass transition temperature" or "$T_g$" as used herein, means the temperature at or above which a glassy polymer undergoes segmental motion of the polymer chain. Glass transition temperatures of a polymer are estimated by the Fox equation [*Bulletin of the American Physical Society* 1, 3 Page 123 (1956)], as follows:

$$\frac{1}{T_g} = \frac{w_1}{T_{g(1)}} + \frac{w_2}{T_{g(2)}}$$

For a copolymer, $w_1$ and $w_2$ are the weight fraction of the two co-monomers, and $T_{g(1)}$ and $T_{g(2)}$ are the glass transition temperatures, in degrees Kelvin, of the two corresponding homopolymers. For polymers containing three or more monomers, additional terms ($W_n/T_{g(n)}$) are added. The $T_g$ of a polymer phase is calculated by using the appropriate values for the glass transition temperatures of homopolymers, such as those found, for example, in "Polymer Handbook", edited by J. Brandrup and E. H. Immergut, Interscience Publishers. The values of $T_g$ reported herein are measured using dynamic mechanical analysis.

The use of the term "(meth)" followed by another term such as acrylate refers to both acrylates and methacrylates. For example, as used herein, the term "(meth)acrylate" refers to either acrylate or methacrylate, the term "(meth)acrylic" refers to either acrylic or methacrylic, and the term "(meth)acrylamide" refers to either acrylamide or methacrylamide.

The cold seal adhesive of the present invention is prepared by the polymerization of a curable composition. The curable composition contains at least one ethylenically unsaturated compound, at least one liquid elastomer, and optionally, at least one tackifier. The curable composition is typically applied onto a substrate and then polymerization of the at least one ethylenically unsaturated compound is induced to provide the cold seal adhesive.

Ethylenically unsaturated compounds suitable in the preparation of the cold seal adhesive include ethylenically unsaturated monomers and ethylenically unsaturated oligomers. Ethylenically unsaturated monomers are compounds having a molecular weight below 500 and having one or more ethylenic unsaturations, such as acryloxy groups and methacryloxy groups. Examples of ethylenically unsaturated monomers include, but are not limited to, monoethylenically unsaturated monomers including $C_1$ to $C_{40}$ alkyl esters of (meth)acrylic acid such as methyl (meth)acrylate, ethyl (meth)acrylate, butyl (meth)acrylate, 2-ethyl hexyl (meth)acrylate, isooctyl (meth)acrylate, isodecyl (meth)acrylate, lauryl (meth)acrylate, stearyl (meth)acrylate, and tridecyl (meth)acrylate; (meth)acrylates containing rings such as tetrahydrofurfuryl (meth)acrylate, isobornyl (meth)acrylate, and caprolactone (meth)acrylate; (meth)acrylates containing hydroxyl groups such as 2-hydroyethyl (meth)acrylate and hydroxypropyl (meth)acrylate; (meth)acrylates containing reacted ethylene oxide groups such as 2-(2-ethoxyethoxy) ethyl (meth)acrylate, 2-phenoxyethyl (meth)acrylate, ethoxylated nonyl phenol (meth)acrylate, methoxy polyethylene glycol (meth)acrylate, and ethoxylated hydroxyethyl (meth) acrylate; and (meth)acrylates with other functional groups such as glycidyl (meth)acrylate. Other suitable ethylenically unsaturated monomers include, but are not limited to, multiethylenically unsaturated monomers including allyl (meth) acrylate, ethylene glycol di(meth)acrylate, diethylene glycol di(meth)acrylate, triethylene glycol di(meth)acrylate, tetraethylene glycol di(meth)acrylate, polyethylene glycol di(meth)acrylate, 1,3-butylene glycol di(meth)acrylate, 1,4-butanediol di(meth)acrylate, 1,6-hexanediol di(meth)acrylate, neopentyl glycol di(meth)acrylate, ethoxylated bisphenol A di(meth)acrylate, cyclohexane dimethanol di(meth)acrylate, dipropylene glycol di(meth)acrylate, trimethylolpropane tri(meth)acrylate, tris (2-hydroxyethyl) isocyanurate tri(meth)acrylate, pentaerythritol tri(meth)acrylate, propoxylated trimethylpropane tri(meth)acrylate, propoxylated glyceryl triacrylate, pentaerythritol tetra(meth)acrylate, and ditrimethylol propane tetraacrylate. Still other suitable ethylenically unsaturated monomers include functional monomers such as carboxylic acid monomers and sulfonic acid containing monomers. Functional monomers are optionally included in the curable composition to improve one or more desired properties, such as providing a coating with increased adhesion to a substrate compared to a comparative coating prepared in the absence of the particular functional monomer. Examples of functional monomers include carboxylic acid monomers such as (meth)acrylic acid, itaconic acid, fumaric acid, crotonic acid, maleic acid, monomethyl itaconate, monomethyl fumarate, and monobutyl fumarate, and salts thereof; phosphorus containing monomers such as allyl phosphate, mono- or diphosphate of bis(hydroxy-methyl) fumarate or itaconate, derivatives of (meth)acrylic acid esters, such as, form example, phosphates of hydroxyalkyl(meth) acrylates including 2-hydroxyethyl (meth)acrylate, 3-hydroxypropyl (meth)acrylate, phosphonate functional monomers including vinyl phosphonic acid, allyl phosphonic acid, 2-acrylamido-2-methylpropanephosphonic acid, α-phosphonostyrene, 2-methylacrylamido-2-methylpropanephosphonic acid, phosphoethyl (meth)acrylate; and sulfonic acid containing monomers such as 2-acrylamido-2-methyl-1-propanesulfonic acid and sodium vinyl sulfonate; and silicone containing monomers such as vinyl trimethoxy silane and methacryloxy propyl trimethoxy silane.

Ethylenically unsaturated oligomers are low molecular weight polymers containing at least two ethylenically unsaturated functionalities. Ethylenically unsaturated functionalities include, for example, acryloxy groups and methacryloxy groups. The ethylenically unsaturated oligomers have a number average molecular weight, $M_n$, in the range of 500 to 50,000, preferably in the range of 750 to 30,000, and more preferably in the range of 1000 to 10,000. Examples of ethylenically unsaturated oligomers suitable for use in the curable composition of this invention include multifunctional (meth)acrylates obtained by reaction of a (meth)acryloxy-containing compound, such as (meth)acrylic acid, (meth) acryloyl halide, or a (meth)acrylic acid ester, with various compounds, such as hydroxy-containing alkyd resins, polyester condensates, or polyether condensates. Typical examples include:

(A) Urethane (meth)acrylates obtained by reacting isocyanate groups of a polyisocyanate, such as hexamethylene diisocyanate with a hydroxyalkyl (meth)acrylate, e.g. hydroxyethyl methacrylate. Examples of polyurethane poly (meth)acrylate oligomers are disclosed in U.S. Patent No. 3,297,745.

(B) Polyether (meth)acrylates obtained by the esterification of hydroxy-terminated polyethers with (meth)acrylic acid as disclosed in U.S. Patent No. 3,380,831.

(C) Polyester having at least two (meth)acrylate groups obtained by esterifying hydroxyl groups with (meth)acrylic acid as disclosed in U.S. Patent No. 3,935,173.

(D) Multifunctional (meth)acrylates obtained by the reaction of a hydroxyalkyl (meth)acrylate, such as hydroxyethyl (meth)acrylate, with any one of: (a) dicarboxylic acids having from 4 to 15 carbon atoms, (b) polyepoxides having terminal glycidyl groups, (c) polyisocyanates having terminal reactive isocyanate groups. Multifunctional (meth) acrylates are disclosed in U.S. Patent No. 3,560,237.

(E) (Meth)acrylate-terminated polyesters made from (meth)acrylic acid, a polyol having at least three hydroxyl groups, and a dicarboxylic acid as disclosed in U.S. Patent No. 3,567,494.

(F) Multifunctional (meth)acrylates obtained by the reaction of (meth)acrylic acid with at least two epoxy groups of epoxidized drying oils, such as soybean oil, linseed oil, and epoxidized corresponding drying oil fatty acid, an ester, or amide thereof, or the corresponding alcohol, containing at least two epoxy groups. Such multifunctional (meth)acrylates are disclosed in U.S. Patent No. 3,125,592.

(G) Multifunctional (meth)acrylates which are urethane or amine derivatives of the poly(meth)acrylated epoxidized drying oils, fatty acids, and epoxidized corresponding drying oil fatty acid, an ester, or amide thereof, or the corresponding alcohol, containing at least two epoxy groups. These multifunctional (meth)acrylates are obtained by the reaction of isocyanate(s) or amine(s) respectively with the poly(meth)acrylated epoxidized drying oils, fatty acids, and epoxidized corresponding drying oil fatty acid, an ester, or amide thereof, or the corresponding alcohol, containing at least two epoxy groups. The urethane and amine derivatives retain some or all of the (meth)acrylate groups and are disclosed in U.S. Patent No. 3,876,518 and U.S. Patent No. 3,878,077.

(H) Multifunctional (meth)acrylates obtained by reaction of (meth)acrylic acid by addition to the epoxy groups of aromatic bisphenol-based epoxy resins as disclosed in U.S. Patent No. 3,373,075.

(I) (Meth)acrylated polybutadienes obtained by the addition of (meth)acrylic acid to a linear vinyl polymer having pendant glycidyl groups such as oligomers of glycidyl (meth)acrylate, or of vinyl glycidyl ether or vinyl glycidyl sulfide as disclosed in U.S. Patent No. 3,530,100 or by the addition of (meth)acrylic acid to a linear vinyl polymer having pendant or terminal alcohol groups.

(J) Multifunctional (meth)acrylates derived from (meth)acrylic acid anhydride and polyepoxides as disclosed in U. S. Patent No. 3,676,398.

(K) Multifunctional (meth)acrylate urethane esters obtained from the combining of hydroxyalkyl (meth)acrylates, a diisocyanate, and a hydroxyl functional alkyd condensate as disclosed in U.S. Patent No. 3,673,140.

(L) (Meth)acrylate terminated urethane polyesters obtained by reaction of a polycaprolactone diol or triol with an organic polyisocyanate such as diisocyanate and a hydroxyalkyl (meth)acrylate. Such products are disclosed in U.S. Patent No. 3,700,643.

(M) Urethane multifunctional (meth)acrylates obtained by reaction of a hydroxyl-containing ester of a polyol with (meth)acrylic acid and a polyisocyanate, such as those described in U.S. Patent No. 3,759,809.

Preferred ethylenically unsaturated oligomers are diethylenically unsaturated oligomers.

The level of ethylenically unsaturated compound in the curable composition is in the range of from 30 to 90 weight %, preferably in the range of from 40 to 80 weight %, and more preferably, in the range of from 45 to 75 weight %, based on the weight of the curable composition. The ethylenically unsaturated monomer is often included in order to lower the viscosity of the curable composition. The curable composition typically is formulated with two or more ethylenically unsaturated compounds selected from ethylenically unsaturated monomers, ethylenically unsaturated oligomers, or mixtures thereof. A mixture of at least one ethylenically unsaturated monomer and at least one ethylenically unsaturated oligomer is typically used be obtain a desired property or a desired set of properties, such as the viscosity of the curable composition, polymerization rate for the curable composition, or autohesion, tack, or primary adhesion for the cold seal adhesive.

In one embodiment, the level of the at least one ethylenically unsaturated monomer in the curable composition is in the range of from 0 to 50 weight %, preferably from 10 to 45 weight %, and more preferably, from 20 to 40 weight %, based on the total weight of the curable composition.

In another embodiment, the level of the ethylenically unsaturated oligomer is in the range of from 0 to 40 weight %, preferably from 5 to 35 weight %, and more preferably, from 10 to 30 weight %, based on the total weight of the curable composition.

The curable composition also contains at least one liquid elastomer. A liquid elastomer is a polymer, which provides the cold seal adhesive prepared from the curable composition with increased flexibility. The liquid elastomer suitable for use in the curable composition has number average molecular weight, $M_n$, in the range of from 1,000 to 20,000, preferably 1,000 to 10,000. The glass transition temperature of the liquid elastomer is less than -20°C, preferably less than -30°C, and more preferably less than -40°C. Further, the liquid elastomer is a liquid-like material at ambient temperature, such as 20°C. Preferred are liquid elastomers having a Brookfield viscosity at a temperature of 25°C of less than 20 Pascal-second (Pa-s). The liquid elastomer is compatible with the at least one ethylenically unsaturated compound. As used herein, "compatible" refers to the ability to form a uniform mixture from the liquid elastomer and the at least one ethylenically unsaturated compound such that the two components can be mixed and applied onto a substrate before one of the components forms a separate observable phase. Although the liquid elastomer optionally contains functional groups, it is preferred that these functional groups are remain substantially unreacted during the polymerization of the ethylenically unsaturated compound. Examples of such functional groups include epoxides and ethylenic unsaturations in close proximity to large blocking groups. Preferred elastomers are polymers that do not contain (meth)acryloxy groups. Examples of liquid elastomers include polybutadienes, polyisoprenes, and polyurethanes. The curable composition optionally contains a mixture of two or more liquid elastomers.

The curable composition optionally contains at least one tackifier. The addition of the tackifier is useful for modifying the viscoelastic properties of the curable composition, for example, to increase the initial tack or "grab" of the curable composition when it is contacted with a substrate. The tackifier has number average molecular weight less than or equal to 1500. The optional tackifier is able to form a uniform mixture with the other components of the curable composition including the at least one liquid elastomer and the at least one ethylenically unsaturated compound such that the various components can be mixed and applied onto a substrate before one of the components forms a separate observable phase. The tackier is further characterized as having a softening point in the range of 65°C to 150°C, preferably in the range of 65°C to 100°C, and most preferably, in the range of 65°C to 90°C. As used herein, softening point is measured by the Ring and Ball Method according to ASTM Test Method E28-99. Suitable tackifiers include rosin, hydrogenated rosin, polymerized rosin, hydrogenated polymerized rosin, esters of rosin, hydrogenated esters of rosin, modified rosin esters, esters of polymerized rosin, esters of hydrogenated rosin, $C_5$ and $C_9$ hydrocarbon resins, hydrogenated dicyclopentadiene resins, hydrogenated $C_9$ resins, hydrogenated pure monomer resins, linear homopolymers of α-methyl styrene, α-pinene terpene hydrocarbon resin, aromatic modified $C_5$ hydrocarbon resin, vinyl toluene α-methyl styrene copolymer resins, β-pinene terpene resins, terpene-phenolic polycyclic hydrocarbon resins, and technical hydroabietyl alcohol. Examples of suitable tackifiers include aliphatic hydrocarbon resins, aromatic hydrocarbon resins, mixed aliphatic-aromatic hydrocarbon resins, rosins and rosin derivatives, terpene resins, and mixtures thereof. Preferred tackifiers are compatible with the mixture of the at least one ethylenically unsaturated compound and the at least one elastomer contained in the curable composition. More preferred tackifiers are hydrogenated hydrocarbon resins. Suitable commercially available tackifiers include hydrogenated dicyclopentadienes such as Eastotac™ H-100W resin (Eastotac is a trademark of Eastman Chemical Co.); $C_5$ and $C_9$ hydrocarbon resins such as Escorez™ 1310LC resin, Escorez™ 1580 resin, Escorez™ 2101 resin, Escorez™ 2393 resin, Escorez™ 7312 resin (Escorez is a trademark of Exxon Mobil Corp.); Norsolene S-115 resin, and Norsolene S-135 resin (Cray Valley Co.); styrenated $C_5$ hydrocarbon resins such as Escorez™ 2510 resin and Escorez™ 2596 resin; hydrogenated $C_9$ resins such as Escorez™ 5300 resin, Escorez™ 5380 resin, Escorez™ 5600 resin, Escorez™ 5690 resin, Regalite™ R-1090 resin, Regalite™ R-7100 resin, Regalite™ S-5100 resin, Regalite™ V-1100 resin, and Regalite™ 3102 resin (Regalite is a trademark of Hercules, Inc.); hydrogenated rosins and esters of hydrogenated rosins such as Foral™ 85 rosin, Foral™ NC rosin, Foral™ AX rosin, Foral™ 105 rosin, (Foral is a trademark of Hercules, Inc.)and Stabilite A rosin (Hercules, Inc.); vinyl toluene resins such as Kristalex™ 3085 resin (Kristalex is a trademark of Hercules, Inc.); rosins such as Pamite™ 90 rosin, (Pamite is a trademark of Hercules, Inc.), Resin 861 rosin (Hercules, Inc.) and Ultratac 70 resin (Arizona Chemical Co.); terpene resins such as Piccolite HM-106 resin (Hercules, Inc.); dimerized rosins such as Poly-pale™ rosin and Polyrex™ rosin (Poly-pale and Polyrex are trademarks of Hercules, Inc.); hydrogenated pure monomers such as Regalrez™ 3102 monomer (Regalrez is a trademark of Hercules, Inc.); terpene phenolic resins such as Sylvares™ TP-2040 resin, Sylvares™ TP-300 resin (Sylvares is a trademark of Arizona Chemical Co.), and XR-7086 resin (Arizona Chemical Co.); and aromatically modified terpene resins such as Sylvares™ ZT105 resin. Preferred tackifiers are hydrogenated hydrocarbon resins such as Escorez™ 5300 resin and Escorez™ 5380 resin; and hydrogenated rosins and esters of hydrogenated rosins; and low hydroxyl containing terpene phenolics such as XR-7086 resin (Arizona Chemical Co.). The curable composition contains from 0 to 60 weight %, preferably from 10 to 50 weight %, and more preferably, from 15 to 40 weight % of at least one tackifier, based on the total weight of the curable composition.

The curable composition optionally includes other ingredients including wetting agents, biocides, rheology modifiers, solvents, surfactants, leveling agents, antioxidants, polymerization inhibitors, chain transfer agents, colorants such as dyes, UV stabilizers, and foam control additives. Suitable optional solvents include haloalkanes such as chloroform; ethers such as ethyl ether and tetrahydrofuran; esters such as ethyl acetate; alcohols such as isopropanol and n-butanol; alkanes such as hexane and cyclopentane; ketones such as acetone; amides such as N-methylpyrrolidone; nitriles such as acetonitrile; and aromatics such as toluene. It is preferred that the curable composition contains less than 5 weight % solvent, preferably less than 2 weight % solvent, and most preferably, less than 1 weight % solvent, based on the weight of the curable composition. In a preferred embodiment, the curable composition does not contain solvent.

Photoinitiators are molecules that absorb light, typically in the ultraviolet region of the electromagnetic spectra, and use the absorbed energy to initiate chemical reactions. Examples of photoinitiators are acetophenones; benzophenones; aryldiazonium salts; diarylhalonium salts including diaryliodonium, diarylbromonium, and diarylchloronium salts with complex metal halide anions; triarylsulfonium salts; nitrobenzyl esters; sulfones; and triaryl phosphates. In a preferred embodiment, the curable composition is substantially free of photoinitiator. As used herein, "substantially free of photoinitiator" refers to a level of photoinitiator of less than 2 weight %, preferably less than 1 weight %, and more preferably less than 0.5 weight %, based on the weight of the curable composition. Most preferred is a curable composition having a level of zero weight % photoinitiator. Curable compositions that are substantially free of photoinitiators are useful in applications in which minimizing sources of smell or taste from packaging is important. Examples of such applications include coatings and laminates for food packaging.

The curable composition is polymerized by exposure to an accelerated electron beam, referred to herein as "electron beam radiation", or other types of ionizing radiation such as α-radiation, β-radiation, γ-radiation, and neutron radiation. Exposure to ionizing radiation generates ions or other reactive species that initiate polymerization of the at least one ethylenically unsaturated compound to form the cold seal adhesive. Suitable levels of ionizing radiation to polymerize the curable composition include doses in the range of 0.5 to 25 Mrad, preferably doses in the range of 0.5 to 15 Mrad, and more preferably in the range 1 to 10 Mrad. Alternatively, the curable composition is polymerized by other methods known in the art to generate ions or reactive species such as radicals including, for example, heat activated initiators. Examples of heat activated initiators include azocompounds, t-alkyl peroxides, t-alkyl hydroperoxides, and t-alkyl peresters.

The curable composition is useful for preparing a cold seal adhesive. A method of preparing the cold seal adhesive includes the steps of providing a curable composition containing from 30 to 90 weight % of at least one ethylenically unsaturated compound, from 10 to 50 weight % of at least one liquid elastomer, and from 0 to 60 weight % of at least one tackifier, wherein all weight % are based on total weight of the curable composition; and subjecting the curable composition to electron beam radiation to provide the cold seal adhesive. In many applications, the curable composition is applied onto a substrate to prepare an uncured substrate prior to exposure to the electron beam radiation.

Examples of suitable substrates include glass; cellulosic materials such as paper, paperboard, and cardboard; processed timber such as medium density fiber board, chip board, laminates; mineral substrates such as masonry, cement, fiber cement, cement asbestos, plaster, plasterboard, stucco, glazed and unglazed ceramic; metal substrates such as galvanized iron, galvanized steel, cold rolled steel, aluminum, wrought iron, drop forged steel, stainless steel; asphalt; leather; wallboard; nonwoven materials; and plastics such as polyethylene, polypropylene, polyethylene terephthalate, polycarbonate, acrylonitrile-butadiene-styrene (ABS), ethylene-propylene-diene rubber, polyvinyl chloride, copolymers of vinyl chloride and vinylidene chloride, copolymers of vinyl acetate with low olefins, linear polyester, polyamides, and rubber; and metal foils such as aluminum foil, tin foil, lead foil, and copper foil. Other suitable substrates also include films of aforementioned plastics and plastic films having metal layers or inorganic coatings such as silica or alumina coatings.

Conventional methods to apply the curable composition include, for example, brushing, roll coating, wire-wound rod coating, knife coating, flexo coating, drawdown coating, silk screen application, dipping, gravure application, curtain coating, slot die, and spraying methods such as, for example, air-atomized spray, air assisted spray, airless spray, high volume low pressure spray, and air-assisted airless spray. Typically, the thickness of the applied curable composition is in the range of from 1.3 micron (0.05 mil) to 13 micron (0.5 mil) and preferably in the range of 1.3 micron (0.05 mil) to 8 micron (0.3 mil).

In one embodiment, the process of the present invention is employed for the continuous production of roll stock. Unlike hot melt applied pressure sensitive adhesives, which require heating or casting from solution for application, the process of the present invention allows the room temperature application of the curable composition as a low viscosity composition. Optionally, the curable composition is heated. In the process of this embodiment, a substrate is continuously passed through an applicator. In the applicator, the curable composition is continuously applied onto one surface of the moving substrate to prepare uncured substrate. Next, the moving substrate is exposed to electron beam irradiation to polymerize the curable composition, which was applied onto the surface of the substrate. The resulting article is a substrate with cold seal adhesive on its surface. Preferably, the cold seal adhesive has poor tack with the uncoated side of the substrate so that rolls formed from the substrate with cold seal adhesive on one surface can be unwound at a latter time.

One method to fashion articles containing the cold seal adhesive is to contact a first substrate having the cold seal adhesive on its surface with a second substrate having the cold seal adhesive on its surface such that contact occurs between the two cold seal adhesive layers. Preferably, mild pressure is used to ensure a suitable bond between the two cold seal adhesive layers.

The method of this invention is suitable for preparing laminates including substrates such as the plastics listed hereinabove and metal foils listed hereinabove. Suitable laminates include flexible laminates, such as those used in flexible packaging. Typical ranges for the thickness of a first substrate or second substrate used to prepare a flexible laminate are in the range of 5 micron to 250 micron, preferably in the range of 10 micron to 100 micron for electron beam radiation.

In one embodiment, the process of this invention is used to a laminate containing the cold seal adhesive of this invention. The laminate of this embodiment has a first substrate selected from oriented polypropylene film or low density polyethylene film, and a second substrate selected from metallized oriented polypropylene film, low density polyethylene film, or metallized polyethylene terephthalate film. One method to prepare the laminate of this embodiment is to apply the curable composition of this invention to the first substrate and subject the first substrate with applied curable composition to electron beam radiation to provide the first substrate with cold seal adhesive; apply the curable composition to the second substrate and subject the second substrate with applied curable composition to electron beam radiation to provide the second substrate with cold seal adhesive; and to contact the cold seal adhesive on the first substrate to the cold seal adhesive on the second substrate to prepare the laminate of this embodiment. Pressure is optionally applied when contacting the adhesive layers of the first substrate and the second substrate.

In another embodiment, the process of this invention is used to a laminate containing the cold seal adhesive of this invention. The laminate of this embodiment has a first substrate selected from oriented polypropylene film or low density polyethylene film, and a second substrate selected from polyethylene terephthalate film.

In a further embodiment, a laminate containing the cold seal adhesive is prepared by the process of this invention. The laminate of this embodiment has aluminum foil as the first substrate and a second substrate selected from polyethylene terephthalate film, low density polyethylene film, or oriented polypropylene film.

In still another embodiment, a laminate containing the cold seal adhesive is prepared by the process of this invention. The laminate of this embodiment has a polyamide film as the first substrate and a second substrate selected from low density polyethylene or oriented polypropylene film.

In the laminates of the aforementioned embodiments, the cold seal adhesive is suitable for providing resealable closure to the laminate.

The following examples are presented to illustrate the composition and the process of the invention. These examples are intended to aid those skilled in the art in understanding the present invention. The present invention is, however, in no way listed thereby.

The following materials were used as components of the curable composition:

1,6-HDODA monomer - 1,6-hexanediol diacrylate
CN-301 oligomer - polybutadiene dimethacrylate; $T_g$ = -75°C (Sartomer Co., Exton, PA).
Ricon™ 131 liquid elastomer - polybutadiene; $M_n$ = 4,500; Brookfield
viscosity at 25°C = 2.75 Pa-s (Sartomer Co., Exton, PA).
Ricon™ 142 liquid elastomer - polybutadiene; $M_n$ = 4,100; Brookfield
viscosity at 25°C = 9.75 Pa-s (Sartomer Co., Exton, PA).
Ricon™ 157 liquid elastomer - polybutadiene; $M_n$ = 1,800; Brookfield
viscosity at 25°C = 6 Pa-s (Sartomer Co., Exton, PA).
Escorez™ 2101 tackifier - aliphatic aromatic resin; softening point = 93°C;
$M_w$=1200; $M_n$=500; $T_g$=45°C (ExxonMobil Corp.)

Example 1 - Preparation and Cure of the Curable Compositions

Curable compositions were prepared by combining with mixing the ingredients listed in Table 1.1

Table 1.1 -

| Curable Compositions of Examples 1.1 to 1.3 | | | |
|---|---|---|---|
| Ingredient | Example 1.1 | Example 1.2 | Example 1.3 |
| 1,6-HDODA monomer | 40 wt. % | 40 wt. % | - |
| CN-301 oligomer | - | - | 35 wt. % |
| Ricon™ 142 elastomer | 35 wt. % | - | - |
| Ricon™ 157 elastomer | - | 35 wt. % | - |
| Ricon™ 131 elastomer | - | - | 25 wt. % |
| Escorez™ 2101 tackifier | 25 wt. % | 25 wt. % | 40 wt. % |
| Brookfield Viscosity (25°C) | 0.744 Pa-s | 0.518 Pa-s | - |

The curable compositions of Examples 1.1 to 1.3 were coated onto polyethylene teraphthalate film (PET) at a coat weight of approximately 2 g per meter$^2$ and contacted with the surface of an oriented polypropylene film, which contains a release coating. The coated samples were exposed under a 175 kV electron beam to a dose of 3 Mrad through the oriented polypropylene film to prepare samples of the cold seal adhesive.

The resulting samples of the cold seal adhesive were evaluated by first removing the oriented polypropylene film from the cold seal adhesive/PET film sample and then folding the PET film in half such that the attached cold seal adhesive film contacts itself. Mild pressure was applied to the sample to ensure intimate contact between the two surfaces of the cold seal adhesive. Next, the folded sample was pulled apart by hand and amount of force required to separate the contacted halves of the PET film, referred to as "peel strength", was noted as well as the separation mode of the cold seal adhesive contained between the two halves of the PET film. Cohesive failure refers to separation by the splitting of the cold seal adhesive layer, wherein each half of the PET film retains a layer of cold seal adhesive. Adhesive failure refers to separation of the cold seal adhesive from one of the PET film halves, wherein only one of the two halves retains a layer of cold seal adhesive. Next, the cold seal adhesive film was contacted with itself and resealed with mild pressure. Acceptable properties for the cold seal adhesive are low peel strength, separation by cohesive failure, the ability to reseal with mild pressure, and low surface tack. Low surface tack indicates no "blocking" or sticking of the cold seal adhesive to a substrate such as a film and is important when winding a single side cold seal adhesive coated film on itself.

Table 2.1 -

| Evaluation of the Cold Seal Adhesives Prepared from the Curable Compositions of Examples 1.1 to 1.3 | | | | |
|---|---|---|---|---|
| Curable Composition used to prepare Cold Seal Adhesive | Peel Strength | Separation Mode | Reseal Ability | Surface Tack |
| Example 1.1 | low peel strength | cohesive failure | reseals | low |
| Example 1.2 | low peel strength | cohesive failure | reseals | low |
| Example 1.3 | low peel strength | cohesive failure | reseals | low |

The results in Table 2.1 show that the curable compositions of this invention, as represented by Examples 1.1 to 1.3, are useful for preparing cold seal adhesives with acceptable performance properties. Further, the cold seal adhesives of these examples were prepared by the method of this invention, which included electron beam irradiation to polymerize the curable compositions.

**Claims**

1. A process for preparing a cold seal adhesive comprising the steps of:

   a) providing a curable composition comprising:

   i) from 30 to 90 weight % of at least one ethylenically unsaturated compound selected from the group consisting of ethylenically unsaturated monomers and ethylenically unsaturated oligomers;
   ii) from 10 to 50 weight % of at least one liquid elastomer; and
   iii) from 0 to 60 weight % of at least one tackifier;

   wherein all weight % are based on total weight of said curable composition; and
   b) subjecting said curable composition to electron beam radiation to provide said cold seal adhesive.

2. The process according to claim 1 wherein said cold seal adhesive has a glass transition temperature of -30°C or less.

3. The process according to claim 1 wherein said curable composition comprises from 20 to 60 weight % of said at least one tackifier.

4. The process according to claim 1 wherein said curable composition is substantially free of photoinitiator.

5. A cold seal adhesive prepared by the polymerization of a curable composition comprising:

   a) from 30 to 90 weight % of at least one ethylenically unsaturated compound selected from the group consisting of ethylenically unsaturated monomers and ethylenically unsaturated oligomers;
   b) from 10 to 50 weight % of at least one liquid elastomer selected from the group consisting of polyisoprenes, polybutadienes, and polyurethanes; and
   c) from 0 to 60 weight % of at least one tackifier;

   wherein all weight % are based on total weight of said curable composition; and wherein said curable composition is substantially free of photoinitiator.

6. The cold seal adhesive according to claim 5 having a glass transition temperature of -30°C or less.

7. The cold seal adhesive according to claim 5 wherein said curable composition comprises from 20 to 60 weight % of said at least one tackifier.

8. A curable composition comprising:

a) from 30 to 90 weight % of at least one ethylenically unsaturated compound selected from the group consisting of ethylenically unsaturated monomers and ethylenically unsaturated oligomers;
b) from 10 to 50 weight % of at least one liquid elastomer selected from the group consisting of polyisoprenes, polybutadienes, and polyurethanes; and
c) from 0 to 60 weight % of at least one tackifier;

wherein all weight % are based on total weight of said curable composition; and wherein said curable composition is substantially free of photoinitiator.

9. The curable composition according to claim 8 comprising from 20 to 60 weight % of said at least one tackifier.

10. The curable composition according to claim 8 wherein a cured polymer composition formed from said curable composition has a glass transition temperature of -30°C or less.

## European Patent Office

**EUROPEAN SEARCH REPORT**

Application Number

EP 03 25 7255

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 254 936 A (ROHM & HAAS) 6 November 2002 (2002-11-06) * abstract; claims 1-10 * * page 3, paragraphs 13-15 * * page 4, paragraphs 16-22 * * page 5, paragraph 32 * * page 6, paragraphs 34,38 * * page 8, paragraph 59 * --- | 1-10 | C09J5/00 |
| X | EP 1 239 015 A (SIKA AG) 11 September 2002 (2002-09-11) * abstract; claims 1-13 * * page 3, paragraphs 18,22 * ----- | 5,8 | |

TECHNICAL FIELDS SEARCHED (Int.Cl.7)

C08F
C09J
C08G

The present search report has been drawn up for all claims

| Place of search | Date of completion of the search | Examiner |
|---|---|---|
| THE HAGUE | 4 March 2004 | Bergmans, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

10

## ANNEX TO THE EUROPEAN SEARCH REPORT
## ON EUROPEAN PATENT APPLICATION NO.

EP 03 25 7255

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2004

| Patent document cited in search report | | Publication date | Patent family member(s) | | Publication date |
|---|---|---|---|---|---|
| EP 1254936 | A | 06-11-2002 | EP | 1254936 A2 | 06-11-2002 |
| | | | JP | 2003001785 A | 08-01-2003 |
| | | | US | 2003066600 A1 | 10-04-2003 |
| EP 1239015 | A | 11-09-2002 | EP | 1239015 A1 | 11-09-2002 |
| | | | CA | 2440352 A1 | 12-09-2002 |
| | | | WO | 02070620 A1 | 12-09-2002 |

EPO FORM P0459